# EUROPÄISCHE PATENTANMELDUNG

(11) **EP 1 918 665 A2**
(43) Veröffentlichungstag der Anmeldung: **07.05.2008**
(21) Anmeldenummer: 07021401.0
(22) Anmeldetag: 02.11.2007
(51) Int. Cl.: F27B 7/16, F27D 1/00, C04B 35/10, C04B 35/76, C22B 21/00

(54) **Metallschmelz-Drehtrommelofen**

(30) Priorität: 04.11.2006 DE 202006016876 U
(71) Anmelder: Schmidt Verwaltungs GmbH, 45701 Herten (DE)
(72) Erfinder: Schmidt, Dieter, 45701 Herten (DE)
(74) Vertreter: Nunnenkamp, Jörg

(57) **Zusammenfassung**

Metallschmelz-Drehtrommelofen, insbesondere zum Umschmelzen von Aluminium, mit einer drehbaren Ofentrommel (1), deren Trommelmantel (2) wenigstens einen am Umfang angeordneten Rührkörper (5) aufweist, welcher ganz oder teilweise aus einem mineralischen Feuerfestmaterial (6) hergestellt ist, dadurch gekennzeichnet, dass das Feuerfestmaterial (6) eine Korngröße von 2,0 mm oder weniger aufweist.

## Beschreibung

Die Erfindung betrifft einen Metallschmelz-Drehtrommelofen, insbesondere zum Umschmelzen von Aluminium, vorzugsweise in einem Schutzbad, mit einer drehbaren Ofentrommel, deren Trommelmantel wenigstens einen am Umfang angeordneten Rührkörper aufweist, welcher ganz oder teilweise aus einem mineralischen Feuerfestmaterial hergestellt ist.

Ein solcher Metallschmelz-Drehtrommelofen wird beispielsweise in der EP 1 408 297 B1, der US 6 395 221 B1 oder auch in der WO 2005/090620 A1 beschrieben. Dabei können in den jeweiligen Rührkörper Fasern eingebracht werden, um die Duktilität, also die Dehn-, Streck- oder Verformbarkeit des fraglichen Rührkörpers zu erhöhen. Außerdem sind solche Fasern in der Lage, die Schlagfestigkeit durch ihre rissverteilende Wirkung zu steigern. Das ist seit langem bekannt, wozu nur beispielhaft auf die DE 30 26 570 A1 verwiesen sei, die einen feuerfesten Stein beschreibt, in den bei seiner Herstellung Stahl- oder Edelstahlfasern eingemischt worden sind. Der fragliche Stein kommt u. a. als Futterstein in Drehrohröfen zum Einsatz.

Im Rahmen der WO 2005/090620 A1 wird zwar ein Gehalt an Stahlnadeln bis zu 50 Vol.-% angesprochen. In der Praxis hat sich jedoch gezeigt, dass der vorgenannte Volumenanteil bei weitem nicht erreicht werden kann und folglich die in dem vorgenannten Dokument genannten Vorteile kaum erzielt werden. Hier will die Erfindung insgesamt Abhilfe schaffen.

Der Erfindung liegt das technische Problem zugrunde, einen Metallschmelz-Drehtrommelofen der eingangs beschriebenen Ausgestaltung so weiterzuentwickeln, dass die Standzeit des Rührkörpers und dessen Widerstandsfähigkeit deutlich verbessert werden.

Zur Lösung dieser technischen Problemstellung schlägt die Erfindung nach einer ersten Alternative bei einem gattungsgemäßen Metallschmelz-Drehtrommelofen vor, dass das Feuerfestmaterial zur Herstellung des Rührkörpers eine Korngröße von 2,0 mm und weniger aufweist. Nach vorteilhafter Ausgestaltung werden sogar Korngrößen von 1,0 mm und weniger verfolgt.

Aufgrund dieser geringen Korngröße ist das erfindungsgemäße Feuerfestmaterial bedeutend besser in der Lage, seine Duktilität erhöhende Einlagen bzw. Inhaltsstoffe aufzunehmen, als dies beim Stand der Technik beobachtet wird. Hierbei handelt es sich üblicherweise um Fasern, wobei grundsätzlich solche aus Glas, Kunststoff, Kohlenstoff, Siliziumcarbid, Aluminium-Silikat usw. eingesetzt werden können, und zwar in praktisch beliebiger Form. D. h., es sind gerade Fasern, am Faserende gebogene Fasern, oder auch auf der ganzen Länge gebogene Fasern denkbar. Außerdem lassen sich auf ganzer Länge gequetschte Fasern oder nur jeweils am Faserende gequetschte Fasern bzw. solche einsetzen, die durch eine spanabhebende Bearbeitung gewonnen worden sind. In der Regel kommen jedoch Stahlfasern, insbesondere Edelstahlfasern, zum Einsatz.

Diese Metallfasern bzw. Stahlfasern lassen sich in das Feuerfestmaterial mit einem Gewichtsanteil von bis zu 40 Gew.-%, insbesondere 30 Gew.-%, vorzugsweise mit einem Gewichtsanteil von bis zu 25 Gew.-% und besonders bevorzugt mit einem solchen von bis zu 20 Gew.-% einbringen. Dadurch wird die Biegezugfestigkeit deutlich gesteigert, wobei Werte von 4kN/_{M}² oder sogar noch mehr beobachtet werden. Die Metallfasern bzw. Stahlfasern können eine Länge von bis zu 50 mm und einen Durchmesser bis zu 2 mm aufweisen.

Als Feuerfestmaterial empfiehlt die Erfindung einen Keramikwerkstoff auf der Basis des Systems Aluminiumoxid-Siliziumdioxid. Bekanntermaßen besteht Korund aus Aluminiumoxid, während Siliziumdioxid den Hauptbestandteil von Quarzsand darstellt.

Mit Hilfe des Systems Al₂O₃-SiO₂ können je nach Lage im Phasendiagramm feuerfest-keramische Massen wie beispielsweise Schmelzkorund, Sinteraluminiumoxid usw. hergestellt werden, die üblicherweise in gießfähigem Zustand mit den betreffenden Fasern vermischt werden. Um nun diesen nichtmetallischen, anorganischen Rohstoff zu formen, wird die vorgenannte Mischung aus der Gießmasse und den Fasern üblicherweise in eine (Metall-) Form gegeben und dann bei hohen Temperaturen zur Erzielung der endgültigen Werkstoffeigenschaften gebrannt. Zuvor empfiehlt es sich, das Feuerfestmaterial mechanisch zu verdichten, wie nachfolgend beschrieben wird.

Dabei hat es sich bewährt, wenn das Feuerfestmaterial mehr als 60 Gew.-%, insbesondere mehr als 70 Gew.-% Aluminiumoxid enthält. Außerdem wird in der Regel auf mehr als 20 Gew.-%, insbesondere mehr als 25 Gew.-% Siliziumdioxid zurückgegriffen. Darüber hinaus kommen meistens Zusätze von Magnesia (MgO), Calciumoxid (CaO) und Titandioxid (TiO₂) zum Einsatz.

Im Ergebnis wird ein Metallschmelz-Drehtrommelofen mit einem speziellen Rührkörper zur Verfügung gestellt, der sich durch einen bisher in der Praxis nicht erreichten Gewichtsanteil an Fasern bzw. Stahlfasern in seinem Innern auszeichnet. Dieser hohe Gewichtsanteil an Fasern bzw. Stahlfasern kann in das mineralische Feuerfestmaterial eingebracht werden, weil dieses in einer äußerst geringen Korngröße von weniger als 2,0 mm und insbesondere weniger als 1,0 mm vorliegt. Infolge dieser geringen Korngröße werden in der Mischung aus dem Feuerfestmaterial und den Fasern praktisch keine Hohlräume (mehr) beobachtet, die im Stand der Technik unvermeidlich sind bzw. in erheblichem Maße beobachtet werden.

Tatsächlich sind die Körner des erfindungsgemäßen Feuerfestmaterials in der Lage, die demgegenüber größeren Fasern - ähnlich wie die Moleküle einer Flüssigkeit - zu umschließen, so dass die Fasern in das Feuerfestmaterial letztlich wie in eine viskose Flüssigkeit eingebettet sind. Durch diese Werkstoffwahl kann der Gehalt an Fasern auf bis zu 20 Gew.-% und insbesondere sogar bis zu 40 Gew.-% gesteigert werden, so dass hierdurch insgesamt die Standfestigkeit des erfindungsgemäßen Rührkörpers bei der beschriebenen Anwendung zum Umschmelzen von Aluminium deutlich gegenüber bisherigen Ausführungsformen gesteigert ist. Hierfür verantwortlich zeichnet insbesondere die erhöhte Biegezugfestigkeit, welche verhindert, dass die fraglichen Rührkörper beim Umschmelzen von Aluminiumschrotten im Beispielfall Risse zeigen, an der Oberfläche abplatzen und im schlimmsten Fall sogar gänzlich zerstört werden.

Hierdurch sind die Rührkörper für den genannten Verwendungszweck prädestiniert, weil sie - ähnlich wie die durch die EP 0 886 118 B1 bekannten Eisenrührer - in der Lage sind, selbst größte Metallbrocken in eine Metallschmelze zu drücken und so den Schmelzvorgang insgesamt beschleunigen. Darin sind die wesentlichen Vorteile zu sehen.

Ähnliche Vorteile und Wirkungen werden beobachtet, wenn im Rahmen eines alternativen Vorschlages bei einem gattungsgemäßen Metallschmelz-Drehtrommelofen die Maßnahme verwirklicht ist, dass das Feuerfestmaterial mechanisch verdichtet ausgebildet ist.

Dabei kann die mechanische Verdichtung durch beispielsweise eine Vibrations-und/oder Ultraschall- und/oder Druck- und/oder Unterdruck- und/oder Zentrifugalkraftbehandlung des Feuerfestmaterials vorgenommen werden. D. h., das zur Herstellung des Rührkörpers eingesetzte mineralische Feuerfestmaterial wird vor dem zumeist obligatorischen Brennvorgang wie beschrieben mechanisch verdichtet.

Eine Alternative und von der Erfindung ebenfalls vorgesehene Möglichkeit sieht vor, dass ergänzend oder auch separat von dem Rührkörper die obligatorische Ausmauerung am Innern des Trommelmantels bzw. das hierzu eingesetzte Feuerfestmaterial ebenfalls mechanisch verdichtet ausgebildet ist. Dabei können die gleichen Verdichtungsmethoden wie zuvor für die an dieser Stelle eingesetzten Ausmauerungssteine aus dem Feuerfestmaterial Verwendung finden. Auch das Feuerfestmaterial mag ähnlich oder gleich wie dasjenige zur Herstellung des einen oder der mehreren Rührkörper gestaltet sein.

Tatsächlich sind in das besagte Feuerfestmaterial (zur Herstellung des Rührkörpers und/oder der Ausmauerungssteine) in der Regel bereits die zuvor beschriebenen Fasern, insbesondere Stahlfasern, eingelagert, nämlich vor dem mechanischen Verdichtungsvorgang. D. h., das Gemisch aus dem mineralischen Feuerfestmaterial mit den eingelagerten Fasern erfährt die beschriebene mechanische Verdichtung. Diese wird im allgemeinen in einer Gießform realisiert, die für die Verdichtung entsprechend beaufschlagt wird. Denkbar ist es hier, die Gießform in Vibrationen zu versetzen und/oder ein Vibrationsmittel in die Gießform einzubringen, beispielsweise einen oder mehrere Vibrationsstäbe.

Alternativ hierzu kann die mechanische Verdichtung auch durch Druckbeaufschlagung des Feuerfestmaterials (mit den eingelagerten Fasern vorgenommen werden. - Zu diesem Zweck mag in die Gießform ein Druckstempel einfahren und das Feuerfestmaterial entsprechend beaufschlagen. Auch eine Zentrifugalkraftbehandlung ist denkbar, indem die Gießform mit dem eingefüllten Feuerfestmaterial (sowie den darin befindlichen Fasern) in eine Schleuder eingebracht wird. Selbstverständlich lassen sich diese Maßnahmen auch kombinieren.

Durch die mechanische Verdichtung des Feuerfestmaterials wird alternativ oder zusätzlich zur geforderten geringen Korngröße eine besonders homogene Mischung des Feuerfestmaterials mit den eingelagerten Fasern erreicht. Dadurch lässt sich wiederum der Gehalt an Fasern auf Werte steigern, die bisher in der Praxis nicht erreicht worden sind, beispielsweise Gewichtsanteile von bis zu 20 Gew.-% Fasern oder ggf. sogar noch mehr.

Die beschriebenen Vorteile treten natürlich dann gesteigert auf, wenn beide behandelten Maßnahmen kombiniert werden, d. h., wenn das Feuerfestmaterial mit einer Korngröße von 2,0 mm und weniger ausgerüstet ist und zugleich eine mechanische Verdichtung erfahren hat. Denn dann lassen sich Fasern mit einem Gewichtsanteil von bis zu 40 Gew.-% in das Feuerfestmaterial einbringen.

Als Folge hiervon werden Dichten des Feuerfestmaterials von ca. 2,6 g/cm³ ohne eingebrachte Fasern beobachtet. Dagegen steigt die Dichte mit eingebrachten Fasern auf Werte von deutlich mehr als 3,0 g/cm³. Die maximale Einsatztemperatur der Rührkörper liegt bei ca. 1400 °C, so dass diese für den beschriebenen Einsatzzweck zum Umschmelzen von Aluminium besonders prädestiniert sind. Denn flüssiges Aluminium weist eine Temperatur von ca. 660 °C auf, so dass die in die Schmelze eintauchenden erfindungsgemäßen Rührkörper von dem Flüssigaluminium nicht angegriffen werden. Infolge ihrer gegenüber den bisherigen Ausgestaltungen deutlich erhöhten Duktilität sind Beschädigungen drastisch verringert und können Rissbildungen aufgrund von mechanischen Beanspruchungen praktisch ausgeschlossen werden.

Da darüber hinaus die Fasern bzw. Stahlfasern homogen in dem Feuerfestmaterial verteilt sind, lassen sich Wärmedehnungen ausschließen und werden auch keine Wärmespannungen beobachtet. Schließlich ist durch die sich beim Umschmelzvorgang in Aluminium unter einem Schutzbad über die Rührkörper legende Schutzschicht aus beispielsweise Salz ein direkter Kontakt zwischen dem Rührkörper und dem flüssigen Aluminium vermindert bzw. tritt quasi nicht auf. Hierin sind die wesentlichen Vorteile zu sehen.

Im Folgenden wird die Erfindung anhand einer lediglich ein Ausführungsbeispiel darstellenden Zeichnung näher erläutert. Es zeigen:
- Fig. 1: den erfindungsgemäßen Metallschmelz-Drehtrommelofen ausschnittsweise in einem Längsschnitt im Bereich des Rührkörpers,
- Fig. 2: einen zu Fig. 1 gehörigen Querschnitt,
- Fig. 3: eine Gießform zur Herstellung des Rührkörpers und
- Fig. 4: einen schematischen Schnitt durch den Rührkörper zur Verdeutlichung der homogenen Verteilung der Fasern in seinem Innern.

In den Figuren ist ein Metallschmelz-Drehtrommelofen bzw. Drehtrommelofen dargestellt. Der Drehtrommelofen wird zum Umschmelzen von Metallen, insbesondere von Aluminium, eingesetzt. Dabei findet der vorgenannte Vorgang des Umschmelzens von Aluminium in der Regel in einem Schutzbad statt. Zu diesem Zweck wird die Metall- bzw. Aluminiumschmelze von einer Schutzschicht bzw. Salzschicht an ihrer Oberfläche abgedeckt. Bei dem Metallschmelz-Drehtrommelofen entsprechend dem dargestellten Beispiel mag es sich um einen solchen handeln, dessen Drehachse im Wesentlichen horizontal zur Erdoberfläche verläuft und fix eingestellt ist. Selbstverständlich umfasst die Erfindung auch einen sog. Dreh-Kippofen, also einen Drehtrommel-ofen, dessen Drehachse zum Beschicken oder für den Metallausgießvorgang gegenüber der Erdoberfläche geneigt werden kann.

In jedem Fall dient die Schutzschicht bzw. Salzschicht dazu, die sich bildende Schlacke zu binden und die Metallschmelze bzw. Aluminiumschmelze vor Oxidationen oder anderen schädlichen Reaktionen zu schützen. Gleichzeitig verhindert die Schutzschicht bzw. Salzschicht, dass eine Flamme eines üblicherweise in das Ofeninnere ragenden Brenners die Oberfläche der Metallschmelze erreicht und hierdurch unkontrolliert Metall verdampft, welches folgerichtig für die Schmelze verloren ist.

Die Schutzschicht bzw. Salzschicht kann besonders dünn ausgebildet werden bzw. ganz entfallen, wenn der oberhalb der Metallschmelze befindliche Raum im Innern des Drehtrommelofens mit einem Schutzgas bzw. einer Schutzgasatmosphäre ausgefüllt wird. Bei dieser Schutzgasatmosphäre mag es sich um eine solche handeln, die ganz oder teilweise Abgas der Wärmequelle bzw. des Brenners enthält. Auch der Zusatz von Inertgasen, beispielsweise Stickstoff, ist denkbar. Jedenfalls werden durch dieses Schutzgas bzw. die Schutzgasatmosphäre etwaige Reaktionen der Aluminiumschmelze gänzlich verhindert bzw. verringert. Dadurch wird der Salzverbrauch vermindert und folglich auch der Anfall an zu deponierendem Sondermüll.

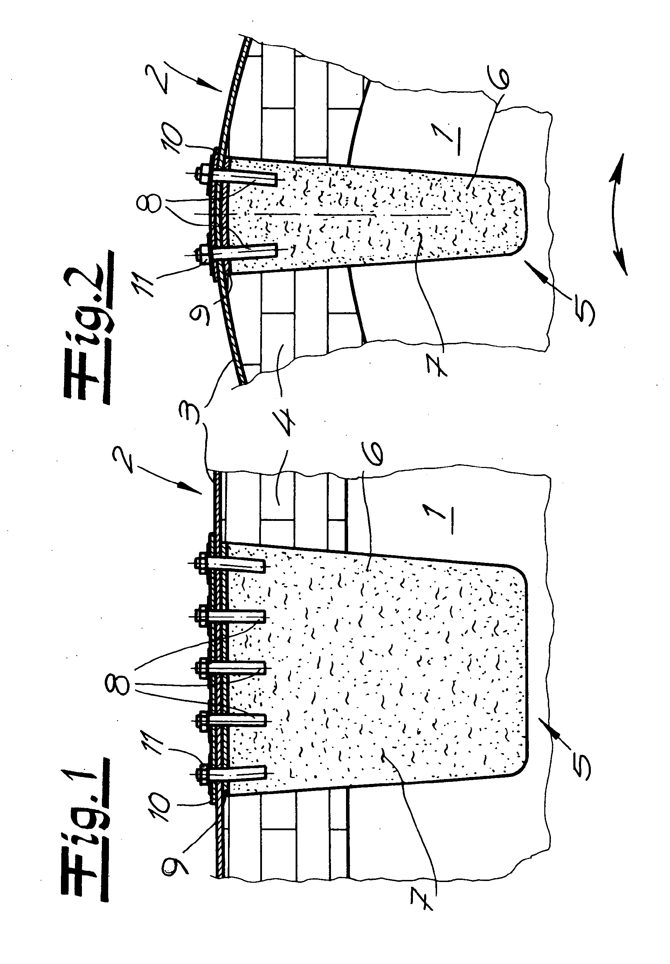

Anhand der Fig. 1 und 2 erkennt man, dass der Drehtrommelofen über eine Ofentrommel 1 sowie einen Trommelmantel 2 verfügt. Der Trommelmantel 2 besitzt eine Stahlblechaußenhülle 3 und eine isolierende hitze- und feuerfeste Auskleidung 4. In die hitze- und feuerfeste Auskleidung 4 sind ein oder mehrere Rührkörper 5 eingebracht, die beispielsweise in eine nicht dargestellte Öffnung des Trommelmantels 2 von außen eingesetzt werden können. Im Rahmen des Ausführungsbeispiels werden die Rührkörper 5 von innen in den Trommelmantel 2 eingebracht und mit diesem verbunden. Danach wird die hitze- und feuerfeste Auskleidung 4 mit dem Trommelmantel 2 verbunden und bedeckt diesen innenseitig vollflächig.

Bei dem einen dargestellten Rührkörper 5 handelt es sich vorliegend um einen solchen, welcher ganz oder teilweise aus einem Feuerfestmaterial 6 hergestellt ist. Man erkennt, dass in das Feuerfestmaterial 6 Fasern 7 eingebettet sind. Bei diesen Fasern 7 handelt es sich vorliegend und nicht einschränkend um Metallfasern 7, insbesondere Stahlfasern. Die Fasern 7 bzw. Stahlfasern 7 verfügen in der Regel über eine Länge von bis zu 50 mm und einen Durchmesser von bis zu 2 mm.

Die Auskleidung 4 ist aus einer Mehrzahl von Ausmauerungssteinen aufgebaut bzw. von Innen her in den Trommelmantel 2 eingebracht. Auch die Ausmauerungssteine können aus dem bereits beschriebenen Feuerfestmaterial 6 mit Fasern 7 - ähnlich wie der Rührkörper 5 - hergestellt und aufgebaut sein. D. h., die Herstellung von einerseits dem Rührkörper 5 und andererseits den Ausmauerungssteinen der Auskleidung 4 mag parallel mit ähnlichen oder gleichen Methoden erfolgen.

Zur Halterung des Rührkörpers 5 im Trommelmantel 2 sind mehrere angedeutete Anker 8 in den Rührkörper 5 fußseitig eingelassen. Selbstverständlich kann auch nur mit einem Anker 8 gearbeitet werden. Die Anker 8 durchgreifen eine Grundplatte 9 des Rührkörpers 5. Die Anker 8 sind zusammen mit der Grundplatte 9 an einem Befestigungsflansch 10 des Trommelmantels 2 bzw. dessen Stahlblechaußenhülle 3 festgelegt. Dazu verfügen die Anker 8 über jeweils einen aufgebrachten Gewindegang, so dass die Befestigung am Trommelmantel 2 mit Hilfe von Muttern 11 gelingt. Das ist selbstverständlich nur als Option und nicht zwingendes Konstruktionsmerkmal anzusehen. Außerdem sollte betont werden, dass die Ofentrommel 1 natürlich auch mit mehr als dem einen dargestellten Rührkörper 5 ausgerüstet werden kann, um den beschriebenen Umschmelzvorgang des Sekundäraluminiums zu vergleichmäßigen.

Das Feuerfestmaterial 6 verfügt nach dem Ausführungsbeispiel über eine Korngröße von maximal 2,0 mm und insbesondere über eine solche von 1,0 mm oder weniger. Diese Korngröße lässt sich durch ein- oder mehrfaches Sieben der Grundmaterialien für das Feuerfestmaterial 6 einstellen. Gleichzeitig gewährleistet dieser Siebvorgang, dass die Körner des Feuerfestmaterials 6 eine nahezu sphärische Gestalt aufweisen. Dadurch legen sich die einzelnen Körner des Feuerfestmaterials 6 - ähnlich einer viskosen Flüssigkeit - praktisch vollständig und vollflächig um die demgegenüber größeren Fasern 7 herum bzw. umschließen diese vollständig. Das erkennt man anhand des Schnittbildes durch den Rührkörper 5 nach Fig. 4, welches im Innern des Rührkörpers 5 keine Hohlräume erkennen lässt.

Hierdurch kann das Feuerfestmaterial 6 bis zu 40 Gew.-% an Fasern 7 aufnehmen, die homogen im Innern des Feuerfestmaterials 6 verteilt angeordnet sind, wie wiederum die Fig. 4 deutlich macht.

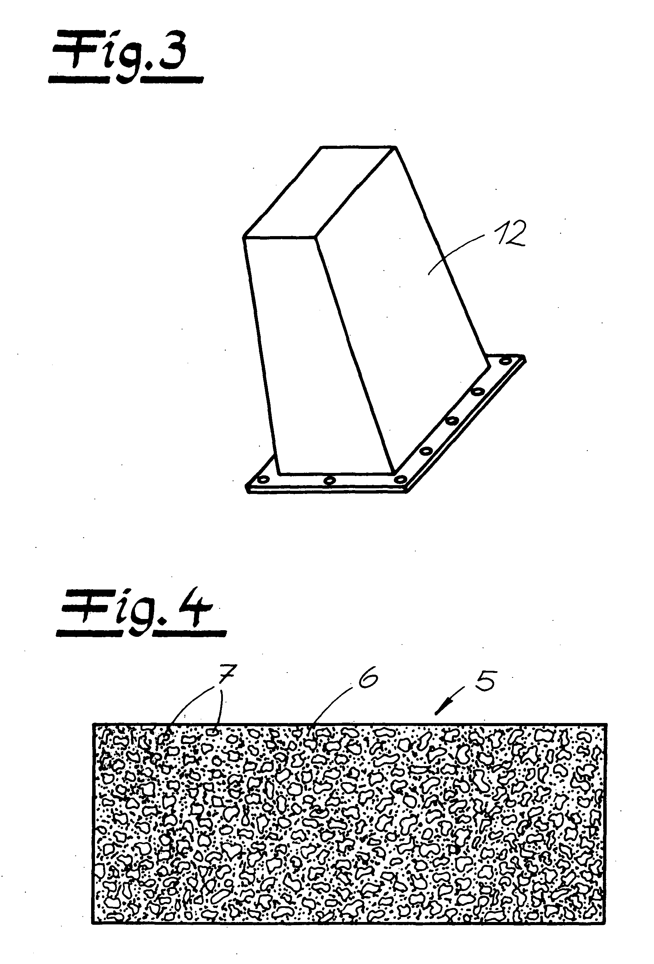

Um diese homogene Verteilung der Fasern 7 zu steigern und folglich auch den Gewichtsanteil der Fasern 7 im Feuerfestmaterial 6, greift die Erfindung nicht nur auf die beschriebenen Korngrößen von 2,0 mm und weniger für das Feuerfestmaterial 6 zurück, sondern wird das Feuerfestmaterial 6 zusammen mit den hierin eingebrachten Fasern 7 mechanisch verdichtet. Um diese mechanische Verdichtung zu erreichen, wird das Gemisch aus dem Feuerfestmaterial 6 und den Fasern 7 in eine Gießform 12 eingebracht, die in Fig. 3 schematisch dargestellt ist. Diese prismatisch geformte Gießform 12 wird nun mit dem eingefüllten Gemisch aus dem Feuerfestmaterial 6 und den Fasern 7 auf einen nicht dargestellten Vibrationstisch gestellt bzw. aufgebracht. Hierdurch wird eine Vibrationsbehandlung des Feuerfestmaterials 6 mit den eingelagerten Fasern 7 vorgenommen. Alternativ könnte man auch eine Ultraschallbehandlung realisieren.

Daneben oder zusätzlich ist es denkbar, die Gießform 12 zusammen mit dem eingefüllten Feuerfestmaterial 6 und den Fasern 7 in eine Schleuder einzubringen und folglich das Feuerfestmaterial 6 mit den Fasern 7 durch eine Zentrifugalkraftbehandlung zu verdichten. Ferner ist es als weitere Option denkbar, die Gießform 12 nach Fig. 3 beispielsweise am Fuß und/oder an ihren Seitenwänden mit Vakuum zu beaufschlagen, um wiederum die gewünschte Verdichtung des Feuerfestmaterials 6 inklusive der Fasern 7 zu erzielen. Als Folge hiervon werden etwaige noch verbleibende Hohlräume im Feuerfestmaterial 6 geschlossen, so dass die in Fig. 4 dargestellte vollständig homogene Verteilung der Fasern 7 in dem Feuerfestmaterial 6 als Ergebnis beobachtet wird.

Nach dem mechanischen Verdichtungsvorgang wird das Feuerfestmaterial 6 in der Regel gebrannt, weil es sich insofern und vorteilhaft um einen Keramikwerkstoff handelt, und zwar einen solchen auf der Basis des Systems Aluminiumoxid (Al₂O₃)-Siliziumoxid (SiO₂). Als Rezeptur für das Feuerfestmaterial 6 empfiehlt die Erfindung folgende Zusammensetzung:

| | |
|---|---|
| Al₂O₃ | ca. 70 Gew.-% |
| SiO₂ | ca. 25 Gew.-% |
| CaO | ca. 2 Gew:-% |
| TiO₂ | ca. 1 Gew.-% |
| Fe₂O₃ | ca. 1 Gew.-% |

| | |
|---|---|
| MgO < 1 Gew.-%. | |

## Patentansprüche

1. Metallschmelz-Drehtrommelofen, insbesondere zum Umschmelzen von Aluminium, mit einer drehbaren Ofentrommel (1), deren Trommelmantel (2) wenigstens einen am Umfang angeordneten Rührkörper (5) aufweist, welcher ganz oder teilweise aus einem mineralischen Feuerfestmaterial (6) hergestellt ist, **dadurch gekennzeichnet, dass** das Feuerfestmaterial (6) eine Korngröße von 2,0 mm oder weniger aufweist.

2. Metallschmelz-Drehtrommelofen nach Anspruch 1, **dadurch gekennzeichnet, dass** das Feuerfestmaterial eine Korngröße von maximal 1,0 mm besitzt.

3. Metallschmelz-Drehtrommelofen nach Anspruch 1 oder 2, **dadurch gekennzeichnet, dass** das Feuerfestmaterial (6) bis zu 40 Gew.-%, insbesondere bis zu 25 Gew.-% und vorzugsweise bis zu 20 Gew.-% Fasern (7), insbesondere Metallfasern (7), aufweist.

4. Metallschmelz-Drehtrommelofen nach Anspruch 3, **dadurch gekennzeichnet, dass** die Fasern (7) eine Länge von bis zu 50 mm und einen Durchmesser von bis zu 2 mm aufweisen.

5. Metallschmelz-Drehtrommelofen nach einem der Ansprüche 1 bis 4, **dadurch gekennzeichnet, dass** das Feuerfestmaterial (6) ein Keramikwerkstoff auf der Basis des Systems Aluminiumoxid-Siliziumdioxid ist.

6. Metallschmelz-Drehtrommelofen nach Anspruch 5, **dadurch gekennzeichnet, dass** das Feuerfestmaterial (6) mehr als 60 Gew.-% Aluminiumoxid und mehr als 20 Gew.-% Siliziumdioxid sowie ggf. Zusätze von Magnesia, Calciumoxid und Titandioxid aufweist.

7. Metallschmelz-Drehtrommelofen, insbesondere zum Umschmelzen von Aluminium, mit einer drehbaren Ofentrommel (1), deren Trommelmantel (2) wenigstens einen am Umfang angeordneten Rührkörper (5) aufweist, welcher ganz oder teilweise aus einem mineralischen Feuerfestmaterial (6) hergestellt ist, **dadurch gekennzeichnet, dass** das Feuerfestmaterial (6) mechanisch verdichtet ausgebildet ist.

8. Metallschmelz-Drehtrommelofen nach Anspruch 7, **dadurch gekennzeichnet, dass** die mechanische Verdichtung durch beispielsweise eine Vibrations-und/oder Ultraschall- und/oder ; Druck- und/oder Unterdruck- und/oder Zentrifugalkraftbehandlung des Feuerfestmaterials (6) vorgenommen wird.

9. Metallschmelz-Drehtrommelofen nach Anspruch 7 oder 8. **dadurch gekennzeichnet, dass** das Feuerfestmaterial (6) eingelagerte Fasern (7), insbesondere Metallfasern (7), aufweist.

10. Metallschmelz-Drehtrommelofen nach einem der Ansprüche 1 bis 9, **dadurch gekennzeichnet, dass** das Feuerfestmaterial (6) zusammen mit den eingelagerten Fasern (7) in einer Gießform (12) zu seiner mechanischen Verdichtung beaufschlagt wird.

11. Metallschmelz-Drehtrommelofen nach einem der Ansprüche 1 bis 10, **dadurch gekennzeichnet, dass** die Maßnahmen der Ansprüche 1 bis 6 einerseits und diejenigen der Ansprüche 7 bis 10 andererseits miteinander wahlweise kombiniert sind.
